# EUROPEAN PATENT SPECIFICATION

(11) **EP 2 532 911 B1**
(45) Date of publication and mention of the grant of the patent: **21.11.2018**
(21) Application number: 11819149.3
(22) Date of filing: 15.04.2011
(51) Int. Cl.: F16D 23/12, B60K 23/02

(54) **SHIFT DETERMINATION DEVICE FOR MANUAL TRANSMISSION**
GANGBESTIMMUNGSVORICHTUNG FÜR EIN SCHALTGETRIEBE
DISPOSITIF DE DÉTERMINATION DU CHANGEMENT DE RAPPORT POUR BOÎTE DE VITESSES MANUELLE

(43) Date of publication of application: 12.12.2012
(73) Proprietor: TOYOTA JIDOSHA KABUSHIKI KAISHA, Toyota-shi, Aichi-ken, 471-8571 (JP)
(72) Inventor: KAINO, Takeshi, Toyota-shi, Aichi-ken, 471-8571 (JP)
(74) Representative: TBK
(86) International application number: PCT/JP2011/059412
(87) International publication number: WO 2012/140777

(56) References cited:
- JP-A- 7 301 320
- JP-A- 63 006 259
- JP-A- 63 151 547
- JP-A- H08 509 284
- JP-A- 2001 280 472
- JP-A- 2002 295 535
- JP-A- 2002 538 393
- JP-A- 2007 132 364
- US-A- 5 020 361
- US-A- 5 416 698
- US-A1- 2004 226 394

## Description

### [Technical Field]

The present invention relates to a shift determining apparatus for a manual transmission according to the preamble of claim 1 mounted in automobiles or the like. In particular, the present invention relates to a procedure for determining whether a driver has performed an appropriate shift operation or not.

### [Background Art]

Conventionally, with a manual transmission for a vehicle as disclosed in, for example, JP 2008-286185 A and JP H8-312687, selection of a gear is performed through the operation of a shift lever by a driver. US 5 416 698 A discloses a shift determining apparatus for manual transmission according to the preamble of claim 1.

For example, with a floorshift-type manual transmission in which a shift lever is located on the cabin floor, the shift lever is disposed in a shift gate provided with a gate channel extending in the right and left directions (vehicle width directions: hereinafter sometimes referred to as select operation directions) and the fore and aft directions (vehicle front-back directions: hereinafter sometimes referred to as shift operation directions) so as to be capable of receiving a shift operation. After a select operation is performed to operate the shift lever in a select operation direction along the gate channel, a shift operation is performed in one of the shift operation directions, and thus a desired gear is achieved in the transmission mechanism of the manual transmission. While this gear is achieved, performing a clutch apparatus engagement operation (a clutch pedal depression releasing operation) engages the clutch apparatus and connects the engine and the transmission mechanism, and thus the engine revolutions are changed according to the gear ratio of the achieved gear, and rotational driving force is output to the drive wheels from the transmission mechanism.

Meanwhile, a manual transmission in particular has a feature that allows a driver to perform a gearshift operation to attain any desired gear. That is, a great feature of a manual transmission is highly liberal gear selectability (gear selection depends on driver's will).

### [Disclosure of Invention]

### [Technical Problems]

However, when a driver operates the shift lever to change gears of a transmission mechanism, if the driver makes an erroneous shift operation, and a gear that is not intended by the driver is selected (hereinafter, such an erroneous operation is referred to as a misshift), the clutch apparatus or the engine may be adversely affected. Also, drivability may deteriorate.

Examples of situations where such a misshift occurs include: with a 6-speed manual transmission, in the case where an upshift is to be made from the second gear to the third gear, a shift operation into the first gear may be performed accidentally; and in the case where a downshift is to be made from the sixth gear to the fifth gear, a shift operation into the third gear may be performed accidentally. When such a misshift occurs, excessive deceleration torque may be input into the clutch apparatus upon clutch engagement, and the engine revolutions may surge suddenly and exceed permissible revolutions. Accordingly a gearshift shock on the decelerated side is produced, and drivability deteriorates.

Not only in the case where such a misshift has occurred, but also even in the case where a driver intentionally has performed a downshift operation, if the selected gear is not appropriate, for example, if a shift operation into a gear that is lower (a gear having a higher gear ratio) than a gear that is regarded appropriate in the current traveling state, excessive deceleration torque may be input into the clutch apparatus upon clutch engagement, and the engine revolutions may exceed permissible revolutions.

Specifically, the following situations are expected:
(1) For example, in a situation where a vehicle takes off and accelerates, a driver performs upshifts while operating the shift lever at a relatively fast operating speed. At this time, if a gear on the downshift side is selected due to a misshift, excessive deceleration torque is input into the clutch apparatus upon clutch engagement, and the clutch apparatus may be adversely affected, or a large gearshift shock (a gearshift shock on the decelerated side) may occur.
(2) In the case where a downshift operation has been intentionally performed in a situation where the traveling speed of a vehicle is relatively high, if the gear ratio of the gear after downshifting is excessively large for the traveling speed, the engine revolutions may surge suddenly upon clutch engagement and exceed permissible revolutions.
(3) In the case where a downshift operation has been intentionally performed in a situation where the traveling speed of a vehicle is relatively high, if a clutch engagement operation is performed in a situation where the engine revolutions are relatively low (for example, the duration of a clutch disengaged state is long) as well, excessive deceleration torque is input into the clutch apparatus upon clutch engagement, and the clutch apparatus may be adversely affected.

In recent years in particular, to improve the fuel consumption rate of engines, transmissions have wide gear ratios or high gear ratios, and thus the above-described situations are likely to occur.

As a procedure to avoid such situations, in JP H8-312687, gearshifts are limited in the case where the estimated revolutions (the revolutions of the input shaft of a transmission) after a shift operation are greater than or equal to predetermined revolutions.

However, it is not possible with this procedure to make use of features of a manual transmission such as highly liberal gear selectability, and a failure to shift into a gear intended by a driver evokes an uncomfortable feeling.

The present invention was accomplished in view of the above-described points, and an object of the present invention is to further develop a shift determining apparatus for a manual transmission according to the preamble of claim 1 that it detects a situation where an appropriate shift operation is not performed, as represented by a misshift, and that can be useful for avoiding an adverse effect on a clutch apparatus or an engine.

### [Means for Solving the Problems]

### - Principles of Solution -

The principle of the present invention for achieving the above-described object is as follows: in the case where a driver makes a misshift, or a downshift operation is not appropriate even if it is intentional, such a shift is detected based on, for example, a change of the input shaft revolutions of a manual transmission, and a warning to the driver and control of a driving source are performed so that the engagement of a clutch apparatus can be avoided in a misshift state or in a state in which an inappropriate gear is achieved.

### - Solving Means -

Specifically, the present invention is solved by a shift determining apparatus for a manual transmission having the features of claim 1. Further advantageous developments are subject matter of dependent claims.

According to the present invention, in the case where a manual shift operation performed by a driver during vehicle traveling is not appropriate (in the case where a gear that is not intended by the driver is selected (misshift), or in the case where the selected gear is not appropriate for the vehicle traveling state even if the driver has intentionally performed a downshift operation), such a shift is detected based on the input shaft revolutions of the manual transmission (the rate of change of revolutions, revolution value, and difference from the revolutions of the driving source, or the like). According to the determination, a manual shift operation for selecting an appropriate gear is advised, or a warning is given to exercise caution when performing an engagement operation on the clutch apparatus, thus making it possible to contribute to avoiding an adverse effect on the clutch apparatus or the driving source, or to performing control of the driving source so as not to impose an adverse effect on the clutch apparatus.

According to the invention, the determining operations of the aforementioned shift determining means includes the first, preferably also the second and/or third of the following three operations.

First, the first determining operation determines that the state in which a gear is selected according to the manual shift operation is not a state in which the engagement of the clutch apparatus is permissible, in the case where an amount of change per unit time of the input shaft revolutions of the manual transmission that change as the manual shift operation is performed by a driver while the clutch apparatus is in a disengaged state is greater than a predetermined rate of change threshold.

The second determining operation determines that the state in which a gear is selected according to the manual shift operation is not a state in which the engagement of the clutch apparatus is permissible, in the case where the input shaft revolutions of the manual transmission that change as the manual shift operation is performed by a driver while the clutch apparatus is in a disengaged state are greater than a predetermined revolution threshold.

The third determining operation determines that the state in which a gear is selected according to the manual shift operation is not a state in which the engagement of the clutch apparatus is permissible, in the case where the difference between the revolutions of the driving source and the input shaft revolutions of the manual transmission that change as the manual shift operation is performed by a driver while the clutch apparatus is in a disengaged state is greater than a predetermined revolution difference threshold.

In the case where a driver made a downshift by a misshift when the driver intended to upshift, the first determining operation enables such a misshift to be determined. For example, in the case where an upshift operation is performed sequentially from the first gear after a vehicle has taken off, the speed of a shift operation by an ordinary driver for reaching the shift position to accomplish the desired gear from the neutral position is relatively fast, whereas in the case where the driver performs a downshift operation to, for example, reduce the speed of the vehicle, the speed of a shift operation for reaching the shift position to accomplish the desired gear from the neutral position is relatively slow (slower than that of the upshift operation). Accordingly, in the case where the driver makes a downshift by a misshift when the driver intends to upshift, the amount of change per unit time of the input shaft revolutions of a manual transmission will rapidly increase and exceed the aforementioned rate of change threshold. By taking advantage of this, the first determining operation is capable of determining the presence or absence of a misshift by determining whether the amount of change per unit time of the input shaft revolutions is greater than a predetermined rate of change threshold.

With the revolution threshold being set to be at the upper limit of the allowable revolutions of the driving source, the second determining operation is capable of determining whether or not the revolutions of the driving source are in a situation where the allowable revolutions are exceeded when the clutch apparatus is engaged, and thus can be useful for protection of the driving source.

Moreover, in the case where the revolutions of the driving source are low, for example, in the case where the duration of clutch apparatus disengagement is relatively long, the difference between the input shaft revolutions of the manual transmission and the revolutions of the driving source is large, and the clutch apparatus may be adversely affected when the clutch apparatus is engaged. The third determining operation is capable of determining the presence or absence of such a situation, and thus can be useful for protection of the clutch apparatus.

Regarding the priority of performing the first to third determining operations, it is preferable that the first determining operation is preferentially performed over the second determining operation and the third determining operation.

This is because the second determining operation and the third determining operation can only perform determination when the manual shift operation is completed (when the gear change of the manual transmission is completed), whereas the first determining operation (a determining operation for determining whether or not the amount of change per unit time of the input shaft revolutions of the manual transmission is greater than a predetermined rate of change threshold) can perform determination during a manual shift operation (the amount of change per unit time of the input shaft revolutions can be obtained during a gear change, thus enabling determination). Accordingly, an action in accordance with the determination result can be taken at an early stage, and it is possible to call for driver's attention at an early stage, thus being effective.

Specific examples of the aforementioned action taken according to the shift determination result are as follows.

First, a warning means is provided that gives a warning to a driver in the case where the shift determining means determines that the state in which a gear is selected according to a manual shift operation is not a state in which the engagement of the clutch apparatus is permissible. For example, a warning to the driver may be made by a warning lamp or a warning buzzer.

Another example may be to provide a revolution increase control means that, in the case where the difference between the revolutions of the driving source and the input shaft revolutions of the manual transmission is greater than the revolution difference threshold, performs revolution increase control for increasing the revolutions of the driving source such that the difference between the revolutions of the driving source and the input shaft is not greater than a predetermined revolution difference threshold.

More specifically, a configuration may be adopted in which a revolution increase control means is provided that performs revolution increase control for increasing the revolutions of the driving source in the case where the difference between the input shaft revolution of the manual transmission and the revolutions of the driving source is greater than a predetermined revolution difference threshold in the third determining operation while the amount of change per unit time of the input shaft revolutions is not greater than the predetermined rate of change threshold in the first determining operation and the input shaft revolutions of the manual transmission is not greater than a predetermined revolution threshold in the second determining operation.

With these solving means, in the case where the difference between the input shaft revolutions and the revolutions of the driving source is greater than a predetermined revolution difference threshold, a situation where the engagement of the clutch apparatus is permissible can be obtained without giving a warning to a driver. Accordingly, without evoking an uncomfortable feeling (an uncomfortable feeling caused by receiving a warning) in the driver, engagement of the clutch apparatus can be permitted while achieving protection of the clutch apparatus.

### [Effects of the Invention]

With the present invention, shift determination is made based on the input shaft revolutions of a manual transmission that change according to a manual shift operation performed by a driver. Accordingly, the present invention can be useful for avoiding an adverse effect on a clutch apparatus or a driving source, or performing control of the driving source so as not to adversely affect the clutch apparatus.

### [Brief Description of Drawings]

[Fig. 1]

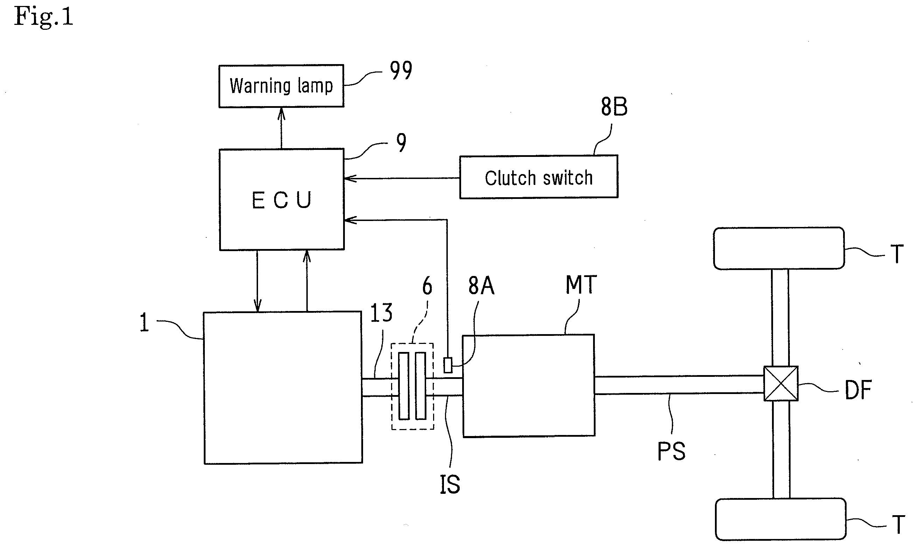

   Fig. 1 is a diagram showing a schematic configuration of a power train mounted in a vehicle according to an embodiment.
[Fig. 2]

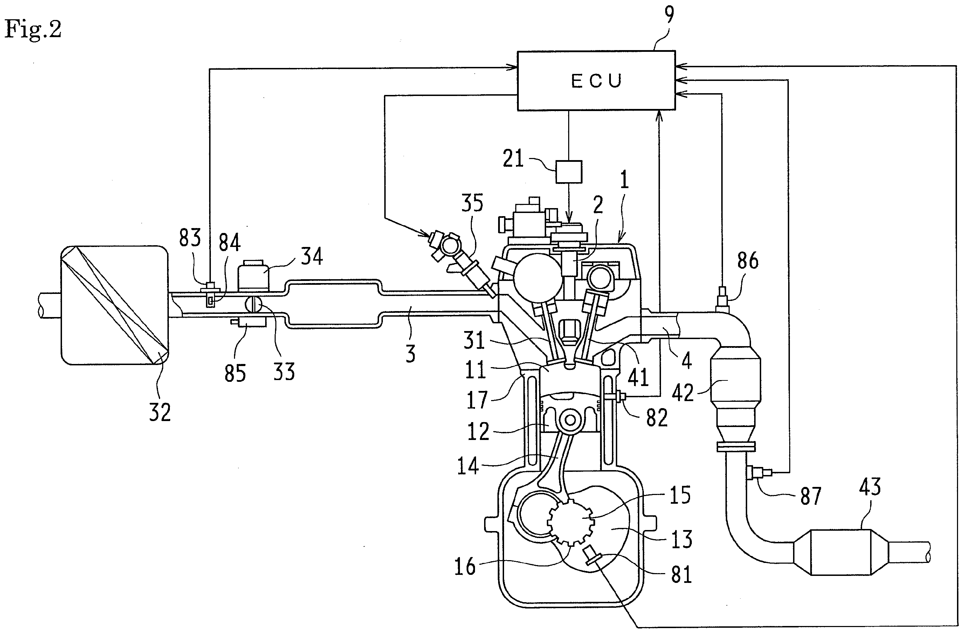

   Fig. 2 is a diagram showing a schematic configuration of an engine and the intake/exhaust system thereof.
[Fig. 3]

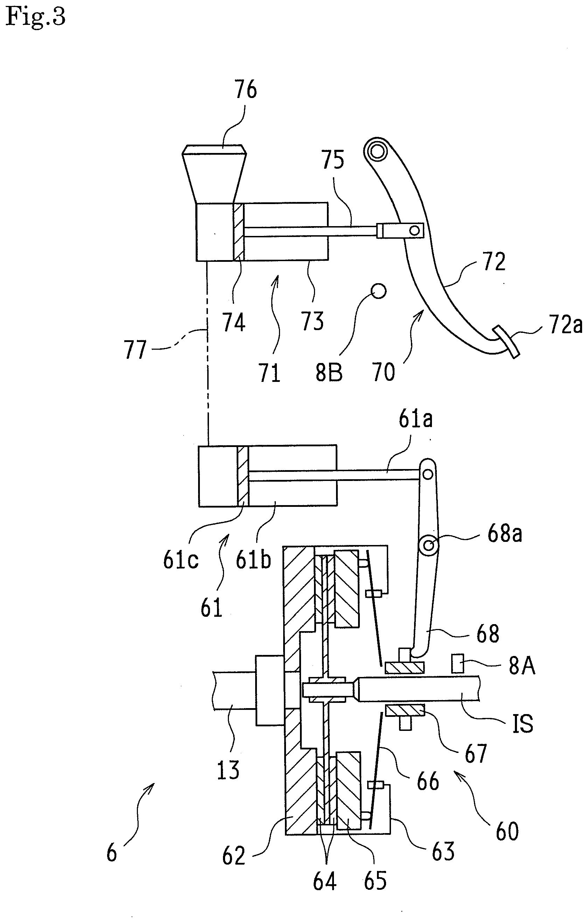

   Fig. 3 is a diagram showing a schematic configuration of a clutch apparatus.
[Fig. 4]

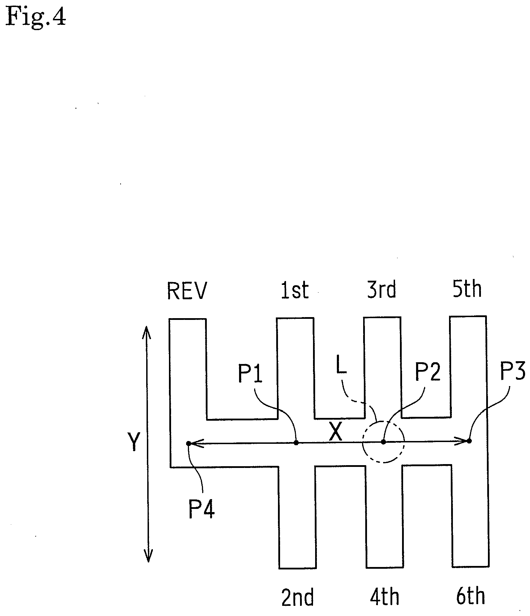

   Fig. 4 is a diagram showing an outline of a shift pattern of a six-speed manual transmission.
[Fig. 5]

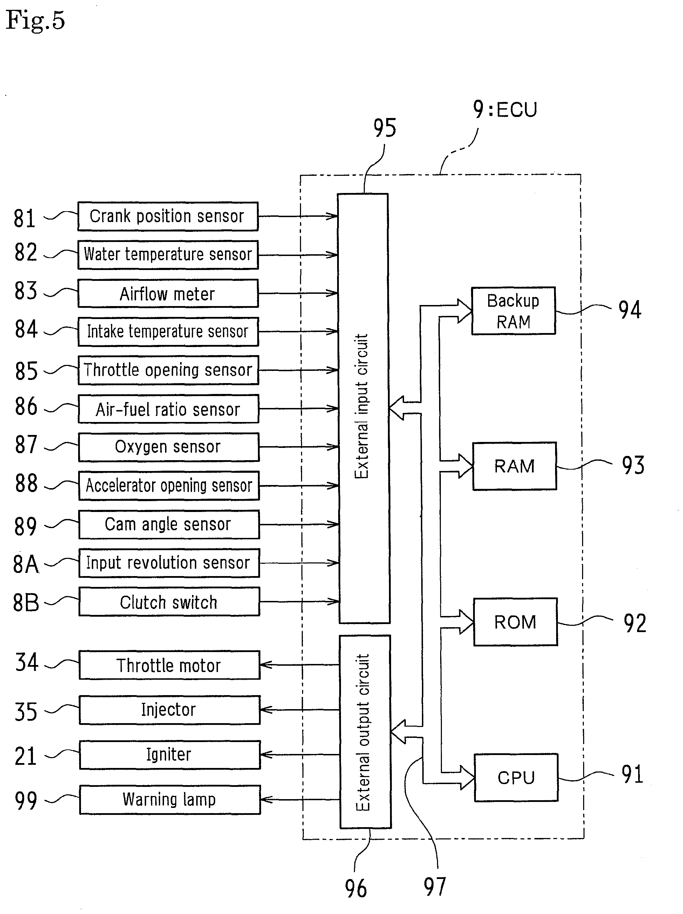

   Fig. 5 is a block diagram showing a configuration of a control system such as an ECU.
[Fig. 6]

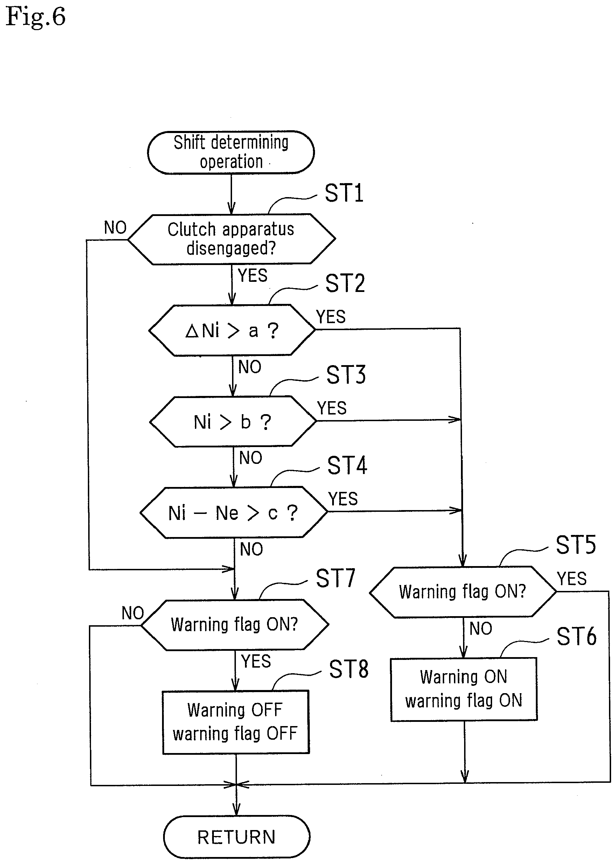

   Fig. 6 is a flowchart showing a procedure of a shift determining operation in Embodiment 1.
[Fig. 7]

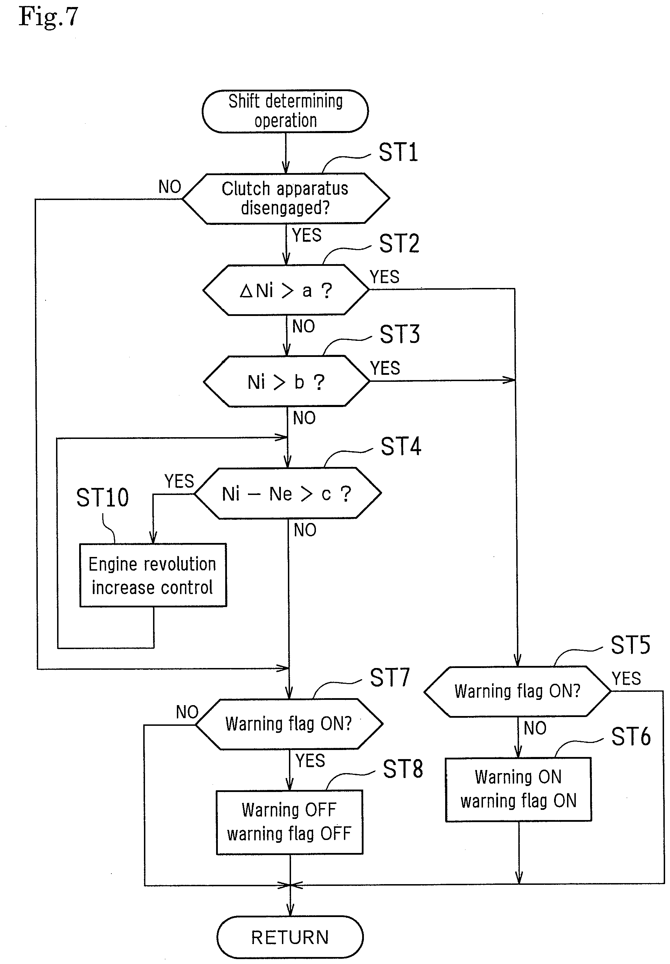

   Fig. 7 is a flowchart showing a procedure of a shift determining operation in Embodiment 2.
[Fig. 8]

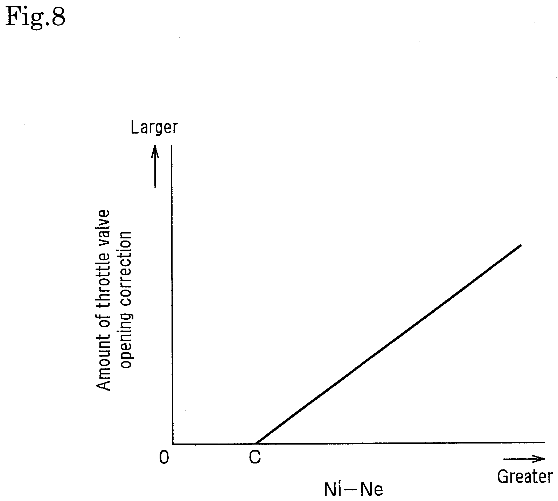

   Fig. 8 is a diagram showing an example of a throttle valve opening correction map.

### [Mode for Carrying Out the Invention]

Embodiments of the present invention will now be described below with reference to the drawings. Regarding the embodiments, a description is given of a case where the present invention is applied to a front-engine rear-drive (FR) vehicle.

Fig. 1 shows a schematic configuration of a power train mounted in a vehicle according to the present embodiment. In Fig. 1, reference numeral 1 refers to an engine (driving source), MT refers to a manual transmission, 6 refers to a clutch apparatus, and 9 refers to an electronic control unit (ECU).

In the power train shown in Fig. 1, the rotational driving force (torque) produced in the engine 1 is input into the manual transmission MT via the clutch apparatus 6, and subjected to a speed change at a suitable gear ratio in the manual transmission MT (the gear ratio of a gear selected by the driver's shift lever operation), and transmitted to the right and left rear wheels (drive wheels) T, T via a propeller shaft PS and a differential gear DF. The manual transmission MT mounted in the vehicle according to the present embodiment is a synchromesh manual transmission having six forward gears and one reverse gear.

Below, a description will now be given of the overall configuration of the engine 1, the clutch apparatus 6, and a control system.

### - Overall configuration of engine 1-

Fig. 2 is a diagram showing a schematic configuration of the engine 1 and the intake/exhaust system thereof. Fig. 2 shows a configuration of only one cylinder of the engine 1.

The engine 1 in the present embodiment is, for example, a 4-cylinder gasoline engine, and includes a piston 12 that forms a combustion chamber 11 and a crank shaft 13 that is an output shaft. The piston 12 is connected to the crank shaft 13 via a connecting rod 14, and the reciprocating movement of the piston 12 is converted into the rotation of the crank shaft 13 by the connecting rod 14.

A signal rotor 15 that has multiple protrusions (teeth) 16 on the outer circumferential surface is attached to the crank shaft 13. A crank position sensor (engine revolution sensor) 81 is disposed near the side of the signal rotor 15. The crank position sensor 81, for example, is an electromagnetic pickup, and generates pulse-like signals (output pulses) that correspond to the protrusions 16 of the signal rotor 15 when the crank shaft 13 rotates.

A water temperature sensor 82 that senses an engine water temperature (coolant temperature) is disposed in the cylinder block 17 of the engine 1.

An ignition plug 2 is disposed in the combustion chamber 11 of the engine 1. The ignition timing of the ignition plug 2 is adjusted by an igniter 21. The igniter 21 is controlled by the ECU 9.

An intake path 3 and an exhaust path 4 are connected to the combustion chamber 11 of the engine 1. An intake valve 31 is provided between the intake path 3 and the combustion chamber 11, and by driving opening/closing of the intake valve 31, the intake path 3 and the combustion chamber 11 are brought into communication with or blocked from each other. An exhaust valve 41 is provided between the exhaust path 4 and the combustion chamber 11, and by driving opening/closing of the exhaust valve 41, the exhaust path 4 and the combustion chamber 11 are brought into communication with or blocked from each other. Driving opening/closing of the intake valve 31 and the exhaust valve 41 is performed by the respective rotation of an intake cam shaft and an exhaust cam shaft to which the rotation of the crank shaft 13 is transmitted.

An air cleaner 32, a hot wire airflow meter 83, an intake temperature sensor 84 (built into the airflow meter 83), and an electronically controlled throttle valve 33 that adjusts the intake air amount of the engine 1 are disposed in the intake path 3. The throttle valve 33 is driven by a throttle motor 34. The opening of the throttle valve 33 is sensed by a throttle opening sensor 85.

An injector 35 for fuel injection is disposed in the intake path 3. Fuel at a predetermined pressure is supplied from a fuel tank to the injector 35 by a fuel pump, and fuel is injected into the intake path 3. The injected fuel is mixed with intake air to become a mixture and is introduced into the combustion chamber 11 of the engine 1. The mixture (fuel + air) introduced into the combustion chamber 11 is subjected to a compression stroke of the engine 1 and then is ignited by the ignition plug 2 and undergoes combustion. The combustion of the mixture in the combustion chamber 11 creates the reciprocating movement of the piston 12, thus rotating the crank shaft 13.

Two 3-way catalysts 42, 43 are disposed in the exhaust path 4 of the engine 1. The 3-way catalysts 42, 43 have an O₂ storage function (an oxygen storage function) for storing (absorbing) oxygen, and due to this oxygen storage function, even when the air-fuel ratio has deviated somewhat from a theoretical air-fuel ratio, it is possible to clean HC, CO, and NOx.

In the exhaust path 4, an A/F sensor (air-fuel ratio sensor) 86 is disposed on the upstream side relative to the upstream-side 3-way catalyst 42, and an oxygen sensor (O₂ sensor) 87 is disposed on the upstream side relative to the downstream-side 3-way catalyst 43.

### - Clutch apparatus 6 -

Fig. 3 shows a schematic configuration of the clutch apparatus 6. As shown in Fig. 3, the clutch apparatus 6 includes a clutch mechanism portion 60, a clutch pedal 70, a clutch master cylinder 71, and a clutch release cylinder 61.

The clutch mechanism portion 60 is provided so as to be interposed between the crank shaft 13 and an input shaft (input axis) IS of the manual transmission MT (see Fig. 1), and transmits/cuts the driving force from the crank shaft 13 to the input shaft IS, or changes the transmission state of the driving force. Here, the clutch mechanism portion 60 is configured as a dry, single-plate, friction clutch. The clutch mechanism portion 60 may have other configurations.

Specifically, a flywheel 62 and a clutch cover 63 are attached to the crank shaft 13, which is the input axis of the clutch mechanism portion 60, so as to be rotatable as a single body. On the other hand, a clutch disc 64 is spline-coupled to the input shaft IS, which is the output shaft of the clutch mechanism portion 60. Accordingly, the clutch disc 64, while being rotatable as a single body together with the input shaft IS, is capable of sliding in the axial directions (the right and left directions in Fig. 3). A pressure plate 65 is disposed between the clutch disc 64 and the clutch cover 63. The pressure plate 65 is in contact with the outer edge of a diaphragm spring 66, and biased toward the flywheel 62 side by the diaphragm spring 66.

A release bearing 67 is attached to the input shaft IS so as to be slidable in the axial directions. Adjacent to the release bearing 67, a release fork 68 is supported by an axis 68a so as to be rotatable, and a first end thereof (the bottom end in Fig. 3) is in contact with the release bearing 67. A second end (top end in Fig. 3) of the release fork 68 is connected to a first end (right end in Fig. 3) of a rod 61a of the clutch release cylinder 61. The engagement/disengagement operation of the clutch mechanism portion 60 is performed as the release fork 68 is actuated.

The clutch pedal 70 is configured so as to form a singly body with a pedal lever 72 and a pedal portion 72a, which is for being stepped on, disposed at the lower end thereof. A place on the pedal lever 72 near the upper end thereof is supported so as to be freely rotatable about a horizontal axis by a clutch pedal bracket (not shown) attached to a dash panel that separates the cabin from the engine room. The pedal lever 72 is biased in a direction of rotation toward the near side (the driver side) by a pedal return spring (not shown). A depression operation on the pedal portion 72a by a driver against the biasing force of the pedal return spring performs a disengagement operation on the clutch mechanism portion 60. Cancelling the depression of the pedal portion 72a by the driver performs an engagement operation on the clutch mechanism portion 60 (the disengagement/engagement operations will be described later).

The clutch master cylinder 71 is configured such that a piston 74 and other components are built into a cylinder body 73. A first end (left end in Fig. 3) of a rod 75 is connected to the piston 74, and a second end of the rod 75 (right end in Fig. 3) is connected to an intermediate portion of the pedal lever 72. A reserve tank 76 is provided in the upper part of the cylinder body 73, which supplies clutch fluid (oil), i.e., working fluid, to the cylinder body 73.

When the clutch master cylinder 71 receives operating force created by a depressing operation on the clutch pedal 70 performed by a driver, the piston 74 moves inside the cylinder body 73, and hydraulic pressure is produced. At this time, the force of the depressing operation of the driver is transmitted from the intermediate portion of the pedal lever 72 to the rod 75, thus producing hydraulic pressure inside the cylinder body 73. The hydraulic pressure produced in the clutch master cylinder 71 varies according to the stroke position of the piston 74 inside the cylinder body 73.

The hydraulic pressure produced by the clutch master cylinder 71 is transmitted to the clutch release cylinder 61 via the oil inside a hydraulic piping 77.

As with the clutch master cylinder 71, the clutch release cylinder 61 is configured such that a piston 61c and other components are built into a cylinder body 61b. A second end (left end in Fig. 3) of the rod 61a is connected to the piston 61c. The stroke position of the piston 61c varies according to the hydraulic pressure the piston 61 receives.

In the clutch apparatus 6, the engagement/disengagement operation of the clutch mechanism portion 60 is performed as the release fork 68 is actuated according to the hydraulic pressure inside the clutch release cylinder 61. In this case, the clutch engagement force (clutch transmission capacity) of the clutch mechanism portion 60 varies according to the amount of a depression operation on the clutch pedal 70.

Specifically, as the amount of a depression operation on the clutch pedal 70 is increased, oil is supplied to the clutch release cylinder 61 from the clutch master cylinder 71, and the hydraulic pressure inside the clutch release cylinder 61 is increased. Then, the piston 61c and the rod 61a move to the right in Fig. 3, and the release fork 68 connected to the rod 61a rotates, thus pushing the release bearing 67 toward the flywheel 62 side. In addition, due to the movement of the release bearing 67 in this direction, the inner end of the diaphragm spring 66 is elastically deformed in this direction. Accordingly, the biasing force on the pressure plate 65 by the diaphragm spring 66 is reduced. Thereby, a half-clutch state is achieved in which the pressure plate 65, the clutch disc 64, and the flywheel 62 are engaged while slippage is allowed. Then, when the biasing force is further reduced, the pressure plate 65, the clutch disc 64, and the flywheel 62 are spaced apart, and the clutch mechanism portion 60 arrives at a disengaged state. Accordingly, power transmission from the engine 1 to the manual transmission MT is cut. In this case, when the amount of a depression operation on the clutch pedal 70 exceeds a predetermined amount, the clutch mechanism portion 60 arrives at a completely disengaged state in which it is completely uncoupled (a state in which the clutch transmission capacity is 0%).

On the other hand, as the amount of a depression operation on the clutch pedal 70 is reduced, oil is returned from the clutch release cylinder 61 to the clutch master cylinder 71, and the hydraulic pressure inside the clutch release cylinder 61 is decreased. Then, the piston 61c and the rod 61a move to the left in Fig. 3, and thus the release fork 68 rotates, and the release bearing 67 moves away from the flywheel 62 side. Accordingly, the biasing force on the pressure plate 65 by the outer edge of the diaphragm spring 66 is increased. At this time, friction force, i.e., clutch engagement force, is produced both between the pressure plate 65 and the clutch disc 64 and between the clutch disc 64 and the flywheel 62. As the clutch engagement force is increased, the clutch mechanism portion 60 is engaged, and the pressure plate 65, the clutch disc 64, and the flywheel 62 are rotated as a single body. Accordingly, the engine 1 and the manual transmission MT are directly coupled. In this case, when the amount of a depression operation on the clutch pedal 70 is less than a predetermined amount, the clutch mechanism arrives at a completely engaged state in which it is completely engaged (a state in which the clutch transmission capacity is 100%).

A clutch switch 8B is disposed adjacent to the pedal lever 72. The clutch switch 8B senses that the amount of depression on the pedal lever 72 performed by the driver has reached a predetermined amount. The position where the clutch switch 8B is disposed is set to be at the position of depression of the pedal lever 72 where the clutch mechanism portion 60 is disengaged. That is, the clutch switch 8B sends an ON signal when the pedal lever 72 is depressed to the position where the clutch mechanism portion 60 is disengaged.

Moreover, an input revolution sensor 8A is disposed adjacent to the input shaft IS. The input revolution sensor 8A senses the revolutions of the input shaft IS (i.e., input shaft revolutions, input shaft revolution speed) and outputs a revolution speed signal to the ECU 9 (see Fig. 1).

### - Shift pattern -

Next, a description will now be given of a shift pattern of a shift gate (shift gate shape) that is disposed on the cabin floor and that guides a shift lever movement.

Fig. 4 shows an outline of a shift pattern of a six-speed manual transmission MT in the present embodiment. A shift lever L indicated by the dashed double-dotted line in the diagram is configured to allow a select operation in the directions indicated by an arrow X in Fig. 4 and a shift operation indicated by an arrow Y perpendicular to the selection operation directions.

In the select operation directions, a first-gear/second-gear select position P1, a third-gear/fourth-gear select position P2, a fifth-gear/sixth-gear select position P3, and a reverse gear select position P4 are arranged in line.

A shift operation (an operation in a direction of the arrow Y) from the first-gear/second-gear select position P1 allows the shift lever L to be moved to a first-gear position 1st or a second-gear position 2nd. In the case where the shift lever L is operated so as to reach the first-gear position 1st, a first synchromesh mechanism provided in the transmission mechanism of the manual transmission MT operates on the first-gear achieving side, thus achieving the first gear. Also, in the case where the shift lever L is operated so as to reach the second-gear position 2nd, the first synchromesh mechanism operates on the second-gear achieving side, thus achieving the second gear.

Likewise, a shift operation from the third-gear/fourth-gear select position P2 allows the shift lever L to be moved to a third-gear position 3rd or a fourth-gear position 4th. In the case where the shift lever L is operated so as to reach the third-gear position 3rd, a second synchromesh mechanism provided in the transmission mechanism of the manual transmission MT operates on the third-gear achieving side, thus achieving the third gear. Also, in the case where the shift lever L is operated so as to reach the fourth-gear position 4th, the second synchromesh mechanism operates on the fourth-gear achieving side, thus achieving the fourth gear.

Also, a shift operation from the fifth-gear/sixth-gear select position P3 allows the shift lever L to be moved to a fifth-gear position 5th or a sixth-gear position 6th. In the case where the shift lever L is operated so as to reach the fifth-gear position 5th, a third synchromesh mechanism provided in the transmission mechanism of the manual transmission MT operates on the fifth-gear achieving side, thus achieving the fifth gear. Also, in the case where the shift lever L is operated so as to reach the sixth-gear position 6th, the third synchromesh mechanism operates on the sixth-gear achieving side, thus achieving the sixth gear.

In addition, a shift operation from the reverse select position P4 allows the shift lever L to be moved to a reverse position REV. In the case where the shift lever is operated so as to reach the reverse position REV, all the synchromesh mechanisms arrive at a neutral state, and an idler reverse gear provided in the transmission mechanism of the manual transmission MT operates, thus allowing a reverse gear to be achieved.

### - Control system -

Varieties of control for the above-described operating states and the like of the engine 1 are controlled by the ECU 9. As shown in Fig. 5, the ECU 9 includes a central processing unit (CPU) 91, a read only memory (ROM) 92, a random access memory (RAM) 93, a backup RAM 94, and the like.

In the ROM 92, various control programs, maps that are referred to when executing such various control programs, and the like are stored. The CPU 91 executes computational processes based on the various control programs and maps stored in the ROM 92. The RAM 93 is a memory that temporarily stores data resulting from computation with the CPU 91 or data that has been input from the respective sensors. The backup RAM 94 is a nonvolatile memory that stores such data or the like to be saved when the engine 1 is stopped.

The ROM 92, the CPU 91, the RAM 93, and the backup RAM 94 are connected to each other via a bus 97, and are connected to an external input circuit 95 and an external output circuit 96 via the bus 97.

Connected to the external input circuit 95 are the aforementioned crank position sensor 81, water temperature sensor 82, air flow meter 83, intake temperature sensor 84, throttle opening sensor 85, air-fuel ratio sensor 86 and oxygen sensor 87 as well as an accelerator opening sensor 88 that senses the opening of an accelerator pedal operated by a driver, a cam angle sensor 89 that senses the rotating position of the cam shaft, the input revolution sensor 8A, the clutch switch 8B, and the like.

On the other hand, connected to the external output circuit 96 are the throttle motor 34 that drives the throttle valve 33, the injector 35, the igniter 21, a warning lamp 99 that turns on when a shift determining operation, which will be described below, determines that it is necessary to give a warning to a driver, and the like. The warning lamp 99 is disposed, for example, on a meter panel in front of the driver's seat or where it is highly visible to the driver. Functions of sensors and like components are well known, and descriptions thereof are omitted herein.

The ECU 9 executes varieties of control of the engine 1 based on the detection signals of the aforementioned various sensors. For example, the ECU 9 executes well-known ignition timing control for the ignition plug 2, fuel injection control for the injector 35 (air-fuel ratio feedback control based on the output of the air-fuel ratio sensor 86 and the oxygen sensor 87), drive control for the throttle motor 34, and the like. Also, the ECU 9 executes a shift determining operation, which will be described below, and in the case where a driver may have made a misshift, or in the case where a downshift operation is determined to be inappropriate even if it is intentional, the ECU 9 turns on the warning lamp 99 or executes control of the engine 1 according to the determination result.

### - Shift determining operation -

Next, the shift determining operation, which is a feature operation of the present embodiment, will now be described. The shift determining operation is performed to determine whether a manual shift operation performed by a driver has selected an appropriate gear or not (including determination of whether a misshift has been performed or not). Specifically, in a state in which the clutch apparatus 6 is disengaged (in a state in which the clutch pedal 70 is depressed), the shift determining operation determines, based on the revolutions Ni of the input shaft IS that change according to the manual shift operation carried out by the driver, whether the state in which a gear selected according to the manual shift operation is a state in which the engagement of the clutch apparatus 6 is permissible or not (is a state in which the engagement of the clutch apparatus 6 as-is does not adversely affect the clutch apparatus 6 or the engine 1, or not), or is a state in which driver's attention should be called for when engaging the clutch apparatus 6 or not (is a state in which caution should be exercised with the speed and the timing of the engagement thereof or not for engaging the clutch apparatus 6 as-is) (a shift determining operation by a shift determining means). In the case of a state in which the engagement of the clutch apparatus 6 is not permissible, or in the case of a state in which driver's attention should be called for when engaging the clutch apparatus 6, a corresponding control operation (turning on the warning lamp 99, executing control of the engine 1, or the like) is performed. Below, multiple embodiments of the control operation performed according to the shift determining operation and the determination result will now be described.

### (Embodiment 1)

First, Embodiment 1 will now be described.

The shift determining operation of the present embodiment uses three conditions as determination conditions for determining that the state in which a gear selected according to a manual shift operation is not a state in which the engagement of the clutch apparatus 6 is permissible or is a state in which driver's attention should be called for when engaging the clutch apparatus 6, and performs a shift determining operation according to these conditions. In the case where it is determined that the state in which a gear selected according to a manual shift operation is not a state in which the engagement of the clutch apparatus 6 is permissible or is a state in which driver's attention should be called for when engaging the clutch apparatus 6, the warning lamp 99 turns on. A specific description is as follows.

Fig. 6 is a flowchart showing the procedure of a shift determining operation in the present embodiment. The procedure of the flowchart shown in Fig. 6 is performed every few milliseconds or every time the crankshaft 13 rotates a predetermined angle while the vehicle is traveling.

First, in step ST1, whether the clutch apparatus 6 is disengaged or not is determined. That is, whether the clutch mechanism portion 60 is disengaged or not by a depression operation on the pedal lever 72 by a driver is determined. Specifically, whether the clutch apparatus 6 is disengaged or not is determined according to an output signal from the clutch switch 8B, and in the case where an ON signal is sent from the clutch switch 8B, it is determined that the clutch apparatus 6 is in a disengaged state.

In the case where the clutch apparatus 6 is not disengaged, and a NO determination is made in step ST1, the process advances to step ST7, and whether a warning flag stored in advance in the ECU 9 is ON or not is determined. The warning flag is a flag that is set to be ON in conjunction with the warning ON (illumination of the warning lamp 99) according to the later-described determination conditions (the determination conditions of steps ST2 to 4) in the case of a state in which the engagement of the clutch apparatus 6 is not permissible, or in the case of a state where driver's attention should be called for when engaging the clutch apparatus 6. In the case where the warning is not ON (the warning is not ON because the clutch apparatus 6 is in an engaged state and a manual shift operation is not performed) and the warning flag is OFF, a NO determination is made in step ST7, and the process is returned.

On the other hand, in the case where the clutch apparatus 6 is disengaged, and a YES determination is made in step ST1, the process advances to step ST2, and the first shift determining operation is performed. The first shift determining operation determines whether the amount of increase ΔNi per unit time of the revolutions Ni of the input shaft IS (the rate of change of input revolutions) sensed by the input revolution sensor 8A is greater than a predetermined rate of change threshold a. The rate of change threshold a is set as a value that corresponds to the amount of increase per unit time of the revolutions of the input shaft IS achieved in the case where an ordinary driver has accidentally performed a downshift operation at a speed of performing an upshift operation (for example, the amount of increase per 0.1 sec of the revolutions of the input shaft IS).

For example, in the case where an upshift operation is sequentially performed from the first speed gear after a vehicle has taken off, the time necessary for an ordinary driver to perform a shift operation for reaching a shift position that achieves the desired gear from the neutral position is about 0.1 sec. For example, after operating the shift lever L from the second-gear position 2nd (see Fig. 4) to the third-gear/fourth-gear select position P2, the time necessary to shift-operate the shift lever L from the third-gear/fourth-gear select position P2 (neutral position) to the third-gear position 3rd is about 0.1 sec.

On the other hand, in the case where an ordinary driver performs a downshift operation to, for example, reduce the speed of a vehicle, the time necessary to perform a shift operation for reaching a shift position that achieves the desired gear from the neutral position is about 0.3 sec. For example, after operating the shift lever L from the third-gear position 3rd (see Fig. 4) to the first-gear/second-gear select position P1, the time necessary to shift-operate the shift lever L from the first-gear/second-gear select position P1 (neutral position) to the first-gear position 1st is about 0.3 sec.

As described above, the shift operation speed of an upshift operation and that of a downshift operation are generally different. Accordingly, in the case where a driver intentionally performs a downshift operation, the time necessary for the revolutions of the input shaft IS to increase from the pre-shifting revolutions to the post-shifting revolutions is normally about 0.3 sec, or when calculated per 0.1 sec, the change of revolutions (rate of change of revolutions) is 1/3 of the difference between the pre-shifting revolutions and the post-shifting revolutions.

In contrast, if a driver makes a misshift and performs a downshift operation at an upshift operation timing (operation speed), the revolutions of the input shaft IS will increase from the pre-shifting revolutions to the post-shifting revolutions in 0.1 sec. The first shift determining operation captures this to detect a misshift. That is, in the case where such a misshift occurs, the amount of increase ΔNi per unit time of the revolutions of the input shaft IS sensed by the input revolution sensor 8A is greater than the predetermined rate of change threshold a.

A specific value of the rate of change threshold a is set to be about, for example, a value of the change of the revolutions of the input shaft IS reached in 0.1 sec in the case where a gear shift is made from the second gear to the first gear (the amount of increase of revolutions) at a vehicle speed at which a gear shift should be made from the second gear to the third gear (for example, 40 km/h) after a vehicle has taken off.

In the case where the amount of increase ΔNi per unit time of the revolutions Ni of the input shaft IS is greater than the predetermined rate of change threshold a, and a YES determination is made in step ST2, the process advances to step ST5, and whether the warning flag is currently ON or not is determined. That is, whether the warning lamp 99 has already been turned on (the warning lamp 99 has already started being illuminated in the previous routine) and accordingly the warning flag is ON or not is determined.

In the case where the warning flag is already ON, and a YES determination is made in step ST5, the warning flag is kept ON, and the process is returned. That is, the warning lamp 99 is kept illuminated.

On the other hand, in the case where the warning flag is OFF, i.e., the warning lamp 99 is turned off (in the case where a NO determination is made in step ST5), the first shift determining operation determines that a condition according to which the warning lamp 99 should be turned on is satisfied for the first time in the current routine, and the process advances to step ST6. Then, the warning lamp 99 is turned on (a warning operation for warning a driver by a warning means), and the warning flag is set to be ON and the process is returned.

Due to the illuminated warning lamp 99, the driver becomes aware of having made a misshift, and the driver will again perform a shift operation (will again perform a shift operation from the first gear to the third gear), or will carefully perform an engagement operation on the clutch apparatus 6 (will slowly perform a depression release operation).

In the case where the amount of increase ΔNi per unit time of the revolutions of the input shaft IS is not greater than the rate of change threshold a, and a NO determination is made in step ST2, the process advances to step ST3, and the second shift determining operation is performed. The second shift determining operation determines whether the revolutions Ni of the input shaft IS sensed by the input revolution sensor 8A are greater than a predetermined revolution threshold b or not. The revolution threshold b is set to be, for example, the upper limit of the allowable revolutions of the engine 1, and is specifically 9000 rpm. It is not limited to this value. That is, whether a situation where the revolutions Ni of the input shaft IS are greater than the upper limit of the allowable revolutions of the engine 1 is reached or not is determined.

For example, in a relatively high vehicle speed situation, in the case where a downshift operation to the second gear is accidentally performed when a downshift operation from the fifth gear to the fourth gear should be performed, and the speed of operation (the speed of operating the shift lever L) is relatively slow, a situation is reached where a NO determination is made in step ST2 and a YES determination is made in step ST3. Also, in the case where a downshift operation to the second gear is accidentally performed when an upshift operation from the third gear to the fourth gear should be performed, and the speed of operation (the speed of operating the shift lever L) is relatively slow, a situation is reached where a NO determination is made in step ST2 and a YES determination is made in step ST3.

In the case where the revolutions Ni of the input shaft IS are greater than the predetermined revolution threshold b, and a YES determination is made in step ST3, the process advances to step ST5, and whether the warning flag is currently ON or not is determined. That is, whether the warning lamp 99 has already been turned on and accordingly the warning flag is ON or not is determined.

In the case where the warning flag is already ON, and a YES determination is made in step ST5, the warning flag is kept ON, and the process is returned. That is, the warning lamp 99 is kept illuminated.

On the other hand, in the case where the warning flag is OFF, i.e., the warning lamp 99 is turned off, according to the second shift determining operation, the warning lamp 99 is turned on, and the warning flag is set to be ON (step ST6) and the process is returned.

Due to the illuminated warning lamp 99, the driver becomes aware of not having performed a shift operation into an appropriate gear, and the driver will again perform a shift operation, or will carefully perform an engagement operation on the clutch apparatus 6.

In the case where the revolutions Ni of the input shaft IS are not greater than the revolution threshold b, and a NO determination is made in step ST3, the process advances to step ST4, and the third shift determining operation is performed. The third shift determining operation determines whether the value obtained by subtracting the engine revolutions Ne calculated based on the output signal of the crank position sensor 81 from the revolutions Ni of the input shaft IS sensed by the input revolution sensor 8A (the difference between the input shaft revolutions and the engine revolutions: Ni-Ne) is greater than a revolution difference threshold c. The revolution difference threshold c is set to be, for example, the upper limit value of the range in which the clutch apparatus 6 is not adversely affected, e.g., damaged, and is specifically 3000 rpm. It is not limited to this value.

For example, in a relatively high vehicle speed situation, in the case where a downshift operation from the fifth gear to the fourth gear is performed, if the duration of the disengagement of the clutch apparatus 6 is relatively long, and the engine revolutions are lowered to about the idling revolutions, a situation is reached where a NO determination is made in both step ST2 and step ST3, and a YES determination is made in step ST4. Also, in the case where an upshift operation from the third gear to the fourth gear is performed, if the duration of the disengagement of the clutch apparatus 6 is relatively long, and the vehicle speed increases as the vehicle travels on a descending slope (the input revolutions also increase), a situation is reached where a NO determination is made in both step ST2 and step ST3, and a YES determination is made in step ST4.

In the case where the difference between the input shaft revolutions and the engine revolutions is greater than the revolution difference threshold c, and a YES determination is made in step ST4, the process advances to step ST5, and whether the warning flag is currently ON or not is determined. That is, whether the warning lamp 99 has already been turned on and accordingly the warning flag is ON or not is determined.

In the case where the warning flag is already ON, and a YES determination is made in step ST5, the warning flag is kept ON, and the process is returned. That is, the warning lamp 99 is kept illuminated.

On the other hand, in the case where the warning flag is OFF, i.e., the warning lamp 99 is turned off, according to the third shift determining operation, the warning lamp 99 is turned on, and the warning flag is set to be ON (step ST6) and the process is returned.

Due to the illuminated warning lamp 99, the driver will again perform a shift operation, or will carefully perform an engagement operation on the clutch apparatus 6.

In the case where the difference between the input shaft revolutions and the engine revolutions is not greater than the revolution difference threshold c, and a NO determination is made in step ST4, the process advances to step ST7, and whether the warning flag is ON or not is determined.

In the case where the warning flag is ON, i.e., the warning lamp 99 is turned on, and a YES determination is made in step ST7 (in the case where the warning lamp 99 is turned on due to any of the shift determining operations in the previous routine), the process advances to step ST8, the warning becomes OFF (the warning lamp 99 is turned off) and the warning flag is reset to be OFF, and the process is returned. On the other hand, in the case where the warning flag is not ON (in the case of a NO determination in step ST7), the process is returned as-is.

As described above, in the present embodiment, in the case where a manual shift operation by a driver is not appropriate (in the case where a gear that is not intended by the driver is selected (misshift), or in the case where the selected gear is not appropriate for the vehicle traveling state even if the driver has intentionally performed a downshift operation), such a shift is detected, and a warning is given to the driver. Accordingly, such a manual shift operation by the driver is permitted, and therefore while making use of a feature of a manual transmission, such as highly liberal gear selectability, it is possible to avoid an adverse effect on the clutch apparatus 6 or the engine 1 through advising a manual shift operation to attain an appropriate gear or giving a warning so as to exercise caution for performing an engagement operation on the clutch apparatus 6. It is also possible to improve drivability by easing a shift shock.

In addition, the first determining operation can make a determination during a manual shift operation. That is, since the amount of increase ΔNi per unit time of the revolutions Ni of the input shaft IS can be obtained during shifting (during a manual shift operation), a shift determination can be made during such a manual shift operation. In the present embodiment, among the first to third determining operations, the first determining operation is performed preferentially over the other determining operations, and therefore it is possible to promptly perform an action (illumination of the warning lamp 99 in the present embodiment) corresponding to the determination result, and it is possible to promptly give a warning to a driver.

### (Embodiment 2)

Next, Embodiment 2 will now be described.

In this embodiment as well, as with Embodiment 1 described above, three conditions are used as determination conditions for determining that the state in which a gear selected according to a manual shift operation is not a state in which the engagement of the clutch apparatus 6 is permissible or is a state in which driver's attention should be called for when engaging the clutch apparatus 6, and performs a shift determining operation according to these conditions. Also, in the present embodiment, in the above-described third shift determining operation (a determining operation based on the difference between the input shaft revolutions Ni and the engine revolutions Ne), an action taken in the case where the difference between the input shaft revolutions Ni and the engine revolutions Ne (Ni-Ne) is greater than the revolution difference threshold c is different from that of Embodiment 1 above. Therefore, only the differences from Embodiment 1 will be described here.

Fig. 7 is a flowchart showing a procedure of a shift determining operation in the present embodiment. In the flowchart shown in Fig. 7, the same operations as those in the flowchart shown in Fig. 6 for Embodiment 1 are given the same step numbers, and descriptions thereof are omitted.

In the third shift determining operation in step ST4, in the case where the difference between the input shaft revolutions Ni and the engine revolutions Ne (Ni-Ne) is greater than the predetermined revolution difference threshold c, and a YES determination is made, the process advances to step ST10, and engine revolution increase control is performed. The engine revolution increase control corrects the opening of the throttle valve 33 so as to be increased by controlling the throttle motor 34, thereby increasing the engine revolutions (revolution increase control on the driving source by a revolution increase control means).

Specifically, the engine revolutions are increased such that the difference between the input shaft revolutions Ni and the engine revolutions Ne (Ni-Ne) is not greater than the revolution difference threshold c.

More specifically, in the case where the difference between the input shaft revolutions Ni and the engine revolutions Ne (Ni-Ne) is greater than the revolution difference threshold c, the engine revolutions are controlled using the target value of the difference (Ni-Ne) as the revolution difference threshold c. That is, in the case where the revolution difference threshold c is set to be 3000 rpm, if the input shaft revolutions Ni are 5500 rpm and the engine revolutions Ne are 2300 rpm (if the revolution difference is 3200 rpm), the opening of the throttle valve 33 is corrected such that the engine revolutions Ne are increased by only 200 rpm. The opening correction operation on the throttle valve 33 is performed according to, for example, a throttle valve opening correction map that is stored in advance in the ROM 92. Fig. 8 shows an example of the throttle valve opening correction map. The amount of throttle valve opening correction is set such that the greater the difference between the input shaft revolutions Ni and the engine revolutions Ne (Ni-Ne), the larger the amount of throttle valve opening correction, in the case where the difference is greater than the revolution difference threshold c.

The engine revolution increase control is performed in this manner, and then the difference between the input shaft revolutions Ni and the engine revolutions Ne (Ni-Ne) is decreased so as to be no greater than the revolution difference threshold c, and a NO determination is made in step ST4, and then the process advances to step ST7. In step ST7, whether the warning flag is ON or not is determined. That is, whether the warning flag is ON (the warning lamp 99 is in an illuminated state) due to a YES determination made in step ST2 or step ST3 in the previous routine or not is determined. In the case where the warning flag is OFF, a NO determination is made in step ST7, and the process is returned. In this case, even if a situation is temporarily reached where the difference between the input shaft revolutions Ni and the engine revolutions Ne (Ni-Ne) is greater than the revolution difference threshold c, the warning lamp 99 will not be turned on and the clutch apparatus 6 will be appropriately engaged.

On the other hand, in the case where the warning flag is ON, i.e., the warning lamp 99 is in an illuminated state, and a YES determination is made in step ST7, the process advances to step ST8, and the warning becomes OFF (the warning lamp 99 is turned off) and the warning flag is reset to be OFF, and the process is returned. In this case, the warning lamp 99 is turned on due to a YES determination made in step ST2 or step ST3 in the previous routine, and then the warning lamp 99 will be turned off as the input shaft revolutions Ni are decreased.

In the present embodiment as well, it is possible to attain the same effect as in Embodiment 1 described above. In addition, in the present embodiment, in the third shift determining operation, in the case where the difference between the input shaft revolutions Ni and the engine revolutions Ne (Ni-Ne) is greater than the revolution difference threshold c, engine revolution increase control is performed. That is, a situation where the engagement of the clutch apparatus 6 is permissible can be attained without giving a warning to a driver. Accordingly, without evoking an uncomfortable feeling in the driver (an uncomfortable feeling caused by receiving a warning), engagement of the clutch apparatus 6 can be permitted while achieving protection of the clutch apparatus 6.

### - Other embodiments -

In the embodiments described above, a case was described where the present invention is applied to a synchromesh manual transmission that is mounted in a FR-type vehicle and that has six forward gears and one reverse gear. The present invention is not limited thereto, and is also applicable to a manual transmission mounted in a vehicle of a different configuration, such as a front-engine, front-drive (FF) vehicle. Moreover, the present invention is also applicable to a transmission having a different number of gears from the transmission described above (for example, a transmission having five forward gears).

In the above-described embodiments, in the case of a state in which driver's attention should be called for when engaging the clutch apparatus 6, the warning lamp 99 is turned on. The present invention is not limited to this configuration, and driver's attention may be called for by blinking the warning lamp 99 or by the sound of a warning buzzer or the like, or by using the warning lamp 99 and such a warning buzzer in combination.

In the embodiments described above, a case was described where the present invention is applied to a vehicle in which the gasoline engine 1 is mounted as a driving source. The present invention is limited to this configuration, and is applicable to a vehicle in which a diesel engine is mounted, and a hybrid vehicle in which an engine (internal combustion engine) and an electric motor (for example, a drive motor, a motor generator, or the like) are mounted.

Moreover, in the embodiments described above, the clutch switch 8B is used as a sensor for determining whether the clutch apparatus 6 is disengaged or not. The present invention is not limited to this configuration, and it is possible to employ a clutch stroke sensor that is capable of sensing the position of the clutch pedal 70, or a stroke sensor that is capable of sensing the slide position of the release bearing 67.

### [Industrial Applicability]

The present invention is applicable to a manual transmission that is capable of determining whether an appropriate shift operation is being performed by a driver or not, and giving a warning, for example, so as to correct a shift operation.

### [Reference Signs List]

- 1: Engine (driving source)
- 33: Throttle valve
- 34: Throttle motor
- 6: Clutch apparatus
- 60: Clutch mechanism portion
- 70: Clutch pedal
- 81: Crank position sensor
- 8A: Input revolution sensor
- 8B: Clutch switch
- 99: Warning lamp (warning means)
- MT: Manual transmission
- IS: Input shaft (input axis)
- L: Shift lever

## Claims

1. A shift determining apparatus for a manual transmission (MT) in which driving force from a driving source (1) is transmitted and cut as a clutch apparatus (6) engages and disengages, and that is capable of selecting any of a plurality of gears according to a manual shift operation performed by a driver while the clutch apparatus (6) is in a disengaged state, the shift determining apparatus for a manual transmission (MT) comprising:
a shift determining means that determines whether a state in which a gear is selected according to the manual shift operation is a state in which engagement of the clutch apparatus (6) is permissible or not, based on input shaft (IS) revolutions of the manual transmission (MT) in a state in which the clutch apparatus (6) is disengaged, the input shaft (IS) revolutions changing as the manual shift operation is performed by the driver while the clutch apparatus (6) is in a disengaged state,
**characterized in that**
the shift determining means is configured so as to determine that the state in which a gear is selected according to the manual shift operation is not a state in which the engagement of the clutch apparatus (6) is permissible, in a case where an amount of change per unit time of the input shaft (IS) revolutions of the manual transmission (MT) that change as the manual shift operation is performed by the driver while the clutch apparatus (6) is in a disengaged state is greater than a predetermined rate of change threshold.

2. The shift determining apparatus for a manual transmission (MT) according to claim 1, wherein
the shift determining means is configured so as to determine that the state in which a gear is selected according to the manual shift operation is not a state in which the engagement of the clutch apparatus (6) is permissible, in a case where the input shaft (IS) revolutions of the manual transmission (MT) that change as the manual shift operation is performed by the driver while the clutch apparatus (6) is in a disengaged state is greater than a predetermined revolution threshold.

3. The shift determining apparatus for a manual transmission (MT) according to claim 1 or 2, wherein
the shift determining means is configured so as to determine that the state in which a gear selected according to the manual shift operation is not a state in which the engagement of the clutch apparatus (6) is permissible, in a case where a difference between revolutions of the driving source (1) and the input shaft (IS) revolutions of the manual transmission (MT) that change as the manual shift operation is performed by the driver while the clutch apparatus (6) is in a disengaged state is greater than a predetermined revolution difference threshold.

4. The shift determining apparatus for a manual transmission (MT) according to claim 1, wherein the shift determining means is configured to perform:
a first determining operation determining whether an amount of change per unit time of the input shaft (IS) revolutions of the manual transmission (MT) that change as the manual shift operation is performed by the driver while the clutch apparatus (6) is in a disengaged state is greater than a predetermined rate of change threshold or not,
a second determining operation determining whether the input shaft (IS) revolutions of the manual transmission (MT) that change as the manual shift operation is performed by the driver while the clutch apparatus (6) is in a disengaged state are greater than a predetermined revolution threshold or not, and
a third determining operation determining whether a difference between revolutions of the driving source (1) and the input shaft (IS) revolutions of the manual transmission (MT) that change as the manual shift operation is performed by the driver while the clutch apparatus (6) is in a disengaged state is greater than a predetermined revolution difference threshold or not, and
preferentially perform the first determining operation over the second determining operation and the third determining operation.

5. The shift determining apparatus for a manual transmission (MT) according to any one of claims 1 to 4, wherein
a warning means is provided that gives a warning to the driver in a case where the shift determining means determines that the state in which a gear selected according to the manual shift operation is not a state in which the engagement of the clutch apparatus (6) is permissible.

6. The shift determining apparatus for a manual transmission (MT) according to claim 3 or 4, wherein
a revolution increase control means is provided that, in a case where the difference between the revolutions of the driving source (1) and the input shaft (IS) revolutions of the manual transmission (MT) is greater than the revolution difference threshold, performs revolution increase control for increasing the revolutions of the driving source (1) such that the difference between the revolutions of the driving source (1) and the input shaft (IS) is not greater than a predetermined revolution difference threshold.

7. The shift determining apparatus for a manual transmission (MT) according to claim 4, wherein
a revolution increase control means is provided that performs revolution increase control for increasing the revolutions of the driving source (1), in a case where the difference between the input shaft (IS) revolutions of the manual transmission (MT) and the revolutions of the driving source (1) is greater than the predetermined revolution difference threshold in the third determining operation while the amount of change per unit time of the input shaft (IS) revolutions is not greater than the predetermined rate of change threshold in the first determining operation and the input shaft (IS) revolutions of the manual transmission (MT) is not greater than the predetermined revolution threshold in the second determining operation.

## Patentansprüche

1. Schaltbestimmungsvorrichtung für ein manuelles Getriebe (MT), in dem eine Antriebskraft von einer Antriebsquelle (1) übertragen und unterbrochen wird, wenn eine Kupplungsvorrichtung (6) einkuppelt und auskuppelt, und die imstande ist, einen beliebigen aus einer Vielzahl von Gängen gemäß einer manuellen Schaltbedienung auszuwählen, die durch einen Fahrer durchgeführt wird, während die Kupplungsvorrichtung (6) in einem ausgekuppelten Zustand ist, wobei die Schaltbestimmungsvorrichtung für ein manuelles Getriebe (MT) Folgendes aufweist:
eine Schaltbestimmungseinrichtung, die bestimmt, ob ein Zustand, in dem ein Gang gemäß der manuellen Schaltbedienung ausgewählt ist, ein Zustand ist, in dem ein Einkuppeln der Kupplungsvorrichtung (6) zulässig ist oder nicht, basierend auf Umdrehungen der Eingangswelle (IS) des manuellen Getriebes (MT) in einem Zustand, in dem die Kupplungsvorrichtung (6) ausgekuppelt ist, wobei sich die Umdrehungen der Eingangswelle (IS) ändern, wenn die manuelle Schaltbedienung durch den Fahrer durchgeführt wird, während die Kupplungsvorrichtung (6) in einem ausgekuppelten Zustand ist, **dadurch gekennzeichnet, dass**
die Schaltbestimmungseinrichtung gestaltet ist, um zu bestimmen, dass der Zustand, in dem ein Gang gemäß der manuellen Schaltbedienung ausgewählt ist, nicht ein Zustand ist, in dem das Einkuppeln der Kupplungsvorrichtung (6) zulässig ist, in einem Fall, bei dem ein Änderungsbetrag pro Zeiteinheit der Umdrehungen der Eingangswelle (IS) des manuellen Getriebes (MT), die sich ändern, wenn die manuelle Schaltbedienung durch den Fahrer durchgeführt wird, während die Kupplungsvorrichtung (6) in einem ausgekuppelten Zustand ist, größer als ein vorbestimmter Änderungsratenschwellenwert ist.

2. Schaltbestimmungsvorrichtung für ein manuelles Getriebe (MT) gemäß Anspruch 1, wobei
die Schaltbestimmungseinrichtung gestaltet ist, um zu bestimmen, dass der Zustand, in dem ein Gang gemäß der manuellen Schaltbedienung ausgewählt ist, nicht ein Zustand ist, in dem das Einkuppeln der Kupplungsvorrichtung (6) zulässig ist, in einem Fall, bei dem die Umdrehungen der Eingangswelle (IS) des manuellen Getriebes (MT), die sich ändern, wenn die manuelle Schaltbedienung durch den Fahrer durchgeführt wird, während die Kupplungsvorrichtung (6) in einen ausgekuppelt Zustand ist, größer als ein vorbestimmter Umdrehungsschwellenwert ist.

3. Schaltbestimmungsvorrichtung für ein manuelles Getriebe (MT) gemäß Anspruch 1 oder 2, wobei
die Schaltbestimmungseinrichtung gestaltet ist, um zu bestimmen, dass der Zustand, in dem ein Gang gemäß der manuellen Schaltbedienung ausgewählt ist, nicht ein Zustand ist, in dem das Einkuppeln der Kupplungsvorrichtung (6) zulässig ist, in einem Fall, bei dem ein Unterschied zwischen Umdrehungen der Antriebsquelle (1) und den Umdrehungen der Eingangswelle (IS) des manuellen Getriebes (MT), die sich ändern, wenn die manuelle Schaltbedienung durch den Fahrer durchgeführt wird, während die Kupplungsvorrichtung (6) in einem ausgekuppelten Zustand ist, größer als ein vorbestimmter Umdrehungsdifferenzschwellenwert ist.

4. Schaltbestimmungsvorrichtung für ein manuelles Getriebe (MT) gemäß Anspruch 1, wobei die Schaltbestimmungseinrichtung gestaltet ist, um Folgendes durchzuführen:
einen ersten Bestimmungsbetrieb, wobei bestimmt wird, ob ein Änderungsbetrag pro Zeiteinheit der Umdrehungen der Eingangswelle (IS) des manuellen Getriebes (MT), die sich ändern, wenn die manuelle Schaltbedienung durch den Fahrer durchgeführt wird, während die Kupplungsvorrichtung (6) in einem ausgekuppelten Zustand ist, größer als ein vorbestimmter Änderungsratenschwellenwert ist oder nicht,
einen zweiten Bestimmungsbetrieb, wobei bestimmt wird, ob die Umdrehungen der Eingangswelle (IS) des manuellen Getriebes (MT), die sich ändern, wenn die manuelle Schaltbedienung durch den Fahrer durchgeführt wird, während die Kupplungsvorrichtung (6) in einem ausgekuppelten Zustand ist, größer als ein vorbestimmter Umdrehungsschwellenwert sind oder nicht, und
ein dritter Bestimmungsbetrieb, wobei bestimmt wird, ob ein Unterschied zwischen Umdrehungen der Antriebsquelle (1) und den Umdrehungen der Eingangswelle (IS) des manuellen Getriebes (MT), die sich ändern, wenn die manuelle Schaltbedienung durch den Fahrer durchgeführt wird, während die Kupplungsvorrichtung (6) in einem ausgekuppelten Zustand ist, größer als ein vorbestimmte Umdrehungsdifferenzschwellenwert ist oder nicht, und
vorzugsweise den ersten Bestimmungsbetrieb vor dem zweiten Bestimmungsbetrieb und dem dritten Bestimmungsbetrieb durchführt.

5. Schaltbestimmungsvorrichtung für ein manuelles Getriebe (MT) gemäß einem der Ansprüche 1 bis 4, wobei
eine Warneinrichtung vorgesehen ist, die dem Fahrer eine Warnung in einem Fall ausgibt, bei dem die Schaltbestimmungseinrichtung bestimmt, dass der Zustand, in dem ein Gang gemäß der manuellen Schaltbedienung ausgewählt ist, nicht ein Zustand ist, in dem das Einkuppeln der Kupplungsvorrichtung (6) zulässig ist.

6. Schaltbestimmungsvorrichtung für ein manuelles Getriebe (MT) gemäß Anspruch 3 oder 4, wobei
eine Umdrehungserhöhungssteuerungseinrichtung vorgesehen ist, die in einem Fall, bei dem der Unterschied zwischen den Umdrehungen der Antriebsquelle (1) und den Umdrehungen der Eingangswelle (IS) des manuellen Getriebes (MT) größer als der Umdrehungsdifferenzschwellenwert ist, eine Umdrehungserhöhungssteuerung zum Erhöhen der Umdrehungen der Antriebsquelle (1) derart durchführt, dass der Unterschied zwischen den Umdrehungen der Antriebsquelle (1) und der Eingangswelle (IS) nicht größer als ein vorbestimmter Umdrehungsdifferenzschwellenwert ist.

7. Schaltbestimmungsvorrichtung für ein manuelles Getriebe (MT) gemäß Anspruch 4, wobei
eine Umdrehungserhöhungssteuerungseinrichtung vorgesehen ist, die eine Umdrehungserhöhungssteuerung zum Erhöhen der Umdrehungen der Antriebsquelle (1) durchführt, in einem Fall, bei dem der Unterschied zwischen den Umdrehungen der Eingangswelle (IS) des manuellen Getriebes (MT) und den Umdrehungen der Antriebsquelle (1) größer als der vorbestimmte Umdrehungsdifferenzschwellenwert in dem dritten Bestimmungsbetrieb ist, während der Änderungsbetrag pro Zeiteinheit der Umdrehungen der Eingangswelle (IS) nicht größer als der vorbestimmte Änderungsratenschwellenwert in dem ersten Bestimmungsbetrieb ist, und die Umdrehungen der Eingangswelle (IS) des manuellen Getriebes (MT) nicht größer als der vorbestimmte Umdrehungsschwellenwert in dem zweiten Bestimmungsbetrieb ist.

## Revendications

1. Appareil de détermination de changement de vitesse pour une transmission manuelle (MT) dans lequel la force d'entraînement provenant d'une source d'entraînement (1) est transmise et coupée lorsqu'un appareil d'embrayage (6) se met en prise et se dégage, et qui est capable de sélectionner l'un quelconque d'une pluralité de rapports selon une opération de changement de vitesse manuelle réalisée par un conducteur alors que l'appareil d'embrayage (6) est dans un état dégagé, l'appareil de détermination de changement de vitesse pour une transmission manuelle (MT) comprenant :
un moyen de détermination de changement de vitesse qui détermine si un état dans lequel un rapport est sélectionné selon l'opération de changement de vitesse manuelle, est un état dans lequel la mise en prise de l'appareil d'embrayage (6) peut être autorisée ou pas, sur la base des révolutions de l'arbre d'entrée (IS) de la transmission manuelle (MT) dans un état dans lequel l'appareil d'embrayage (6) est dégagé, les révolutions de l'arbre d'entrée (IS) changeant lorsque l'opération de changement de vitesse manuelle est réalisée par le conducteur alors que l'appareil d'embrayage (6) est dans un état dégagé,
**caractérisé en ce que** :
le moyen de détermination de changement de vitesse est configuré afin de déterminer que l'état dans lequel un rapport est sélectionné selon l'opération de changement de vitesse manuelle, n'est pas un état dans lequel la mise en prise de l'appareil d'embrayage (6) peut être autorisée, dans un cas dans lequel une quantité de changement par unité de temps des révolutions de l'arbre d'entrée (IS) de la transmission manuelle (MT) qui changent, lorsque l'opération de changement de vitesse manuelle est réalisée par le conducteur alors que l'appareil d'embrayage (6) est dans un état dégagé, est supérieure à un taux prédéterminé de seuil de changement.

2. Appareil de détermination de changement de vitesse pour une transmission manuelle (MT) selon la revendication 1, dans lequel :
le moyen de détermination de changement de vitesse est configuré afin de déterminer que l'état dans lequel un rapport est sélectionné selon l'opération de changement de vitesse manuelle n'est pas un état dans lequel la mise en prise de l'appareil d'embrayage (6) peut être autorisée, dans un cas dans lequel les révolutions de l'arbre d'entrée (IS) de la transmission manuelle (MT) qui changent lorsque l'opération de changement de vitesse manuelle est réalisée par le conducteur alors que l'appareil d'embrayage (6) est dans un état dégagé, sont supérieures à un seuil de révolution prédéterminé.

3. Appareil de détermination de changement de vitesse pour une transmission manuelle (MT) selon la revendication 1 ou 2, dans lequel :
le moyen de détermination de changement de vitesse est configuré afin de déterminer que l'état dans lequel un rapport sélectionné selon l'opération de changement de vitesse manuelle n'est pas un état dans lequel la mise en prise de l'appareil d'embrayage (6) peut être autorisée, dans un cas dans lequel une différence entre les révolutions de la source d'entraînement (1) et les révolutions de l'arbre d'entrée (IS) de la transmission manuelle (MT) qui changent, lorsque l'opération de changement de vitesse manuelle est réalisée par le conducteur alors que l'appareil d'embrayage (6) est dans un état dégagé, est supérieure à un seuil de différence de révolution prédéterminé.

4. Appareil de détermination de changement de vitesse pour une transmission manuelle (MT) selon la revendication 1, dans lequel le moyen de détermination de changement de vitesse est configuré pour réaliser :
une première opération de détermination déterminant si une quantité de changement par unité de temps des révolutions de l'arbre d'entrée (IS) de la transmission manuelle (MT) qui changent lorsque l'opération de changement de vitesse manuelle est réalisée par le conducteur alors que l'appareil d'embrayage (6) est dans un état dégagé, est supérieure à un taux prédéterminé de seuil de changement ou pas,
une deuxième opération de détermination déterminant si les révolutions de l'arbre d'entrée (IS) de la transmission manuelle (MT) qui changent lorsque l'opération de changement de vitesse manuelle est réalisée par le conducteur, alors que l'appareil d'embrayage (6) est dans un état dégagé, sont supérieures à un seuil de révolution prédéterminé ou pas, et
une troisième opération de détermination déterminant si une différence entre les révolutions de la source d'entraînement (1) et les révolutions de l'arbre d'entrée (IS) de la transmission manuelle (MT) qui changent lorsque l'opération de changement de vitesse manuelle est réalisée par le conducteur alors que l'appareil d'embrayage (6) est dans un état dégagé, est supérieure à un seuil de différence de révolution prédéterminé ou pas, et
réaliser de préférence la première opération de détermination plus la deuxième opération de détermination et la troisième opération de détermination.

5. Appareil de détermination de changement de vitesse pour une transmission manuelle (MT) selon l'une quelconque des revendications 1 à 4, dans lequel :
on prévoit un moyen d'avertissement qui avertit le conducteur dans un cas dans lequel le moyen de détermination de changement de vitesse détermine que l'état dans lequel un rapport sélectionné selon l'opération de changement de vitesse manuelle n'est pas un état dans lequel la mise en prise de l'appareil d'embrayage (6) peut être autorisée.

6. Appareil de détermination de changement de vitesse pour une transmission manuelle (MT) selon la revendication 3 ou 4, dans lequel :
on prévoit un moyen de commande d'augmentation de révolution qui, dans un cas dans lequel la différence entre les révolutions de la source d'entraînement (1) et les révolutions de l'arbre d'entrée (IS) de la transmission manuelle (MT) est supérieure au seuil de différence de révolution, réalise la commande d'augmentation de révolution pour augmenter les révolutions de la source d'entraînement (1) de sorte que la différence entre les révolutions de la source d'entraînement (1) et l'arbre d'entrée (IS) n'est pas supérieure à un seuil de différence de révolution prédéterminé.

7. Appareil de détermination de changement de vitesse pour une transmission manuelle (MT) selon la revendication 4, dans lequel :
on prévoit un moyen de commande d'augmentation de révolution qui réalise la commande d'augmentation de révolution pour augmenter les révolutions de la source d'entraînement (1), dans un cas dans lequel la différence entre les révolutions de l'arbre d'entrée (IS) de la transmission manuelle (MT) et les révolutions de la source d'entraînement (1) est supérieure au seuil de différence de révolutions prédéterminé dans la troisième opération de détermination alors que la quantité de changement par unité de temps des révolutions de l'arbre d'entrée (IS) n'est pas supérieure au taux de seuil de changement prédéterminé dans la première opération de détermination et les révolutions de l'arbre d'entrée (IS) de la transmission manuelle (MT) ne sont pas supérieures au seuil de révolution prédéterminé dans la deuxième opération de détermination.
